# EUROPEAN PATENT SPECIFICATION

(11) **EP 2 598 461 B1**
(45) Date of publication and mention of the grant of the patent: **16.12.2015**
(21) Application number: 10855273.8
(22) Date of filing: 30.07.2010
(51) Int. Cl.: C04B 35/195, C04B 35/622, C04B 38/00

(54) **FABRICATION OF CORDIERITE ARTICLE USING WASTE STEEL SLAGS**
HERSTELLUNG VON CORDIERITARTIKELN ANHAND VON STAHLSCHLACKENABFALL
FABRICATION D'UN OBJET EN CORDIÉRITE PAR UTILISATION DE DÉCHETS DE SCORIES D'ACIER

(43) Date of publication of application: 05.06.2013
(73) Proprietor: Empire Technology Development LLC, Wilmington, DE 19808 (US)
(72) Inventor: TOMITA, Yugo, Saitama 363-0025 (JP)
(74) Representative: Grünecker Patent- und Rechtsanwälte PartG mbB
(86) International application number: PCT/JP2010/004856
(87) International publication number: WO 2012/014262

(56) References cited:
- DD-A1- 128 551
- JP-A- 2 018 352
- JP-A- 2 018 352
- JP-A- 7 242 465
- JP-A- 49 099 106
- US-A- 4 818 290
- AHMED,Y.M.Z ET AL.: 'Utilization of Al-slag as a Source in Preparation of Porous Cordierite' PART 1, INTERCERAM vol. 58, no. 5, May 2009, pages 275 - 279, XP008167979
- GHOSH,SYAMAL: 'Development of ceramic tiles from common clay and blast furnace slag' CERAMICS INTERNATIONAL vol. 28, no. 4, 15 April 2002, pages 393 - 400, XP004349697

## Description

### Background

Steel refining plants routinely produce a large amount of steel slags as a by-product of steelmaking. Steel slags typically contain silica (SiO2) and calcium oxide (CaO). The silica mainly comes from raw iron ore. The calcium oxide is added into a furnace to remove silica and alumina from raw steel ore and remains in steel slags. The similarity between the chemical compositions of steel slag and portland cement allows certain types of steel slags to be used as a raw material of construction cement. Other suitable slag applications include paving material and sand compaction pile.

Thus, known recycles of steel slags are limited to applications in the field of construction and civil engineering. Other applications, however, for further utilization of steel slags is possible.

The present invention relates to a method of fabricating a cordierite article comprising: determining relative percentages of SiO₂, Al₂O₃, and MgO included in one or more steel slags; preparing, based on the determined percentages, a starting mixture from said one or more steel slags; molding the starting mixture into a desired shape; and sintering the molded starting mixture, resulting in a sintered mixture. Such method is known from JP 2 018 352 A and US 4818290.

### Brief Description of Drawings

[fig. 1A]FIG. 1A shows an illustrative embodiment of a perspective view of an example ceramic filter body.
[fig. 1B]FIG. 1B shows an illustrative embodiment of a cross-sectional view of an example particulate filter mounting filter body.
[fig.2]FIG. 2 schematically shows example procedures of preparing steel slags.
[fig.3]FIG. 3 illustrates an embodiment of an example process of fabricating an example particulate filter using steel slags as a starting material.
[fig.4]FIG. 4 illustrates an example table storing example values representing weight percentages of steel slags.
[fig.5]FIG. 5 illustrates another embodiment of an example process of fabricating an example particulate filter using steel slags as a starting material.
[fig.6]FIG. 6 schematically shows an illustrative embodiment of an example molding process.
[fig.7]FIG. 7 shows an illustrative embodiment of an example particulate filter.
[fig.8]FIG. 8 illustrates another embodiment of an example process of fabricating an example particulate filter using steel slags as a starting material.

### Detailed Description

Example embodiments relate to a method of fabricating a cordierite article comprising determining relative percentages of SiO₂, Al₂O₃, and MgO included in one or more steel slags. Based on the determined percentages, a starting mixture from said one or more steel slags is prepared. The starting mixture is molded into a desired shape and the molded starting mixture is sintered. In one embodiment, the sintered mixture is composed, at least in part, of cordierite.

According to the invention, the starting mixture is molded to include one or more elongated limbs that define one or more air channels extending in the axis direction of the one or more elongated limbs. The starting mixture may be molded into a honeycomb shape. In one embodiment, the one or more steel slags may include one or more blast furnace slags and/or one or more converter slags.

In another aspect, the starting mixture is prepared by mixing a plurality of steel slags each selected from the group consisting of one or more blast furnace slags, one or more converter slags and one or more electric furnace slags. In another aspect, the starting mixture is molded by extrusion. According to the present invention, the one or more steel slags include a carbide selected from the group consisting of silicon carbide, aluminum carbide, magnesium carbide. In another aspect, the one or more steel slags include a forming agent.

In another aspect, wherein the starting mixture is molded into a plurality of elongated cylindrical filter elements; wherein each of the molded plurality of elongated cylindrical filter elements are sintered; and the method further includes joining the plurality of elongated cylindrical filter elements with one another. In another aspect, the elongated cylindrical filter elements are joined in a side-by-side fashion such that each of the filter elements defines one or more air channels between neighboring filter elements.

Example embodiments relate to a method of fabricating a cordierite article comprising: determining relative percentages of SiO₂, Al₂O₃, and MgO included in one or more steel slags; selecting, based on the determined percentages, at least one of the one or more steel slags; molding the selected one or more steel slags; sintering the molded one or more steel slags.

In another aspect, the sintered one or more steel slags consist of cordierite. In another aspect, the one or more steel slags include at least one of blast furnace slag, converter slag, and electric furnace slag. In another aspect, the starting mixture is molded to include one or more elongated limbs that define one or more air channels extending in the axis direction of the one or more elongated limbs.

Example embodiments relate to a cordierite article comprising a cordierite body, wherein the cordierite body is fabricated from a starting material including at least one of one or more steel slags selected from the group consisting of one or more blast furnace slags, one or more converter slags and one or more electric furnace slags. In another aspect, the cordierite body is formed to include one or more elongated limbs that define one or more air channels extending in the axis direction of the one or more elongated limbs. In another aspect, the cordierite body is formed into a honeycomb shape.

The foregoing summary is illustrative only and is not intended to be in any way limiting. In addition to the illustrative aspects, embodiments, and features described above, further aspects, embodiments, and features will become apparent by reference to the drawings and the following detailed description.

### DEFINITIONS

Blast furnace slag: any type of steel slag which can be produced in any blast furnace during or as a result of refining process of iron ore.

Converter slag: any type of steel slag which can be produced in any converter furnace during or as a result of the process of refining pig iron into steel.

Electric furnace slag: any type of steel slag which can be produced in any electric furnace during or as a result of the process of refining molten metal mixture into steel.

Steel slag: any type of slag produced during or as a result of steel refining process in any type of furnace. Steel slag includes at least furnace slag, converter slag and electric furnace slag.

### Examples

One aspect of this disclosure is based on the inventor's observation that the chemical compositions of steel slags are similar to that of cordierite represented by 2MgO-2Al2O3-5SiO2 and, therefore, steel slags can be used to fabricate a cordierite article suitable for a particulate filter. For example, a Diesel Particulate Filter ("DPF") can be fabricated by using starting materials that come from steel slags. Such a cordierite is economically advantageous as compared to conventional particulate filters that are generally manufactured from expensive raw materials.

Example embodiments of this disclosure relate to a cordierite article suitable for use as a particulate filter body. Such a cordierite article may be fabricated from one or more types of steel slags that may be obtained from various types of furnaces. Example embodiments of this disclosure also relate to a method for fabricating such a cordierite article using steel slags as a starting material.

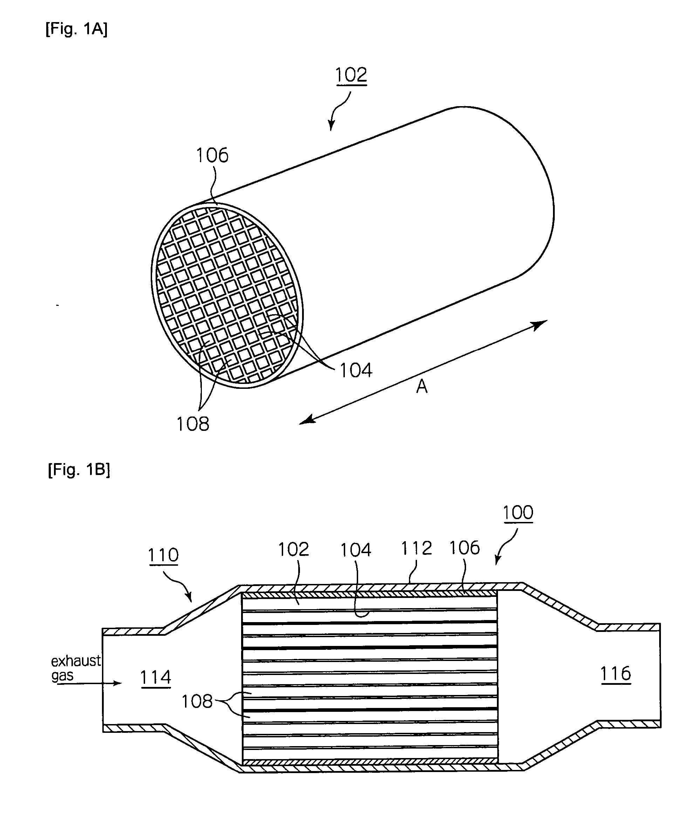

FIG. 1A illustrates a perspective view of an example ceramic cylindrical filter body 102 that can be used as a filter body in a DPF. The filter body 102 comprises a plurality of thin limbs 104 and an outer surface 106. The plurality of limbs 104 are interconnected with one another and extend through the filter body 102 in the axial direction thereof as indicated by arrow A. The plurality of limbs 104 define a plurality of polyhedral cells 108 extending between inlet and outlet surfaces.

As described hereinafter, the filter body 102 is fabricated from a starting material that comes from or contains steel slags and formed into a honeycomb shape which may consist of a plurality of polyhedral cells 108. In one embodiment, each of the polyhedron cells 108 may be formed into a square shape in cross section, as shown in FIG. 1A and other figures. The polyhedral cells 108 may be formed into any desired cross section each of which may be packed closely to one another. Examples of the cross section of the polyhedral cells 108 include at least triangle, square, rectangle and hexagon. The filter body 102 is formed of, at least in part, porous cordierite, which allows each of the plurality of limbs 104 to trap particulates from gases or liquids as they travel through each of the plurality of cells 108.

FIG. 1B shows a cross-sectional view of an example particulate filter 100 mounting the filter body 102. The particulate filter 100 includes filter body 102 and casing 110. The casing 110 comprises cylindrical body 112, conical inlet 114 and conical outlet 116. A contaminated fluid such as exhaust gas may be introduced from the conical inlet 114 into each of the plurality of cells 108 and travel along each of the plurality of limbs 104 up to the conical outlet 116. As the fluid travels through the filter body 102, significant parts of solid particulates included in the introduced fluid are trapped or absorbed by the porous limbs 104. The filtered fluid is discharged from the outlet 116 to the air.

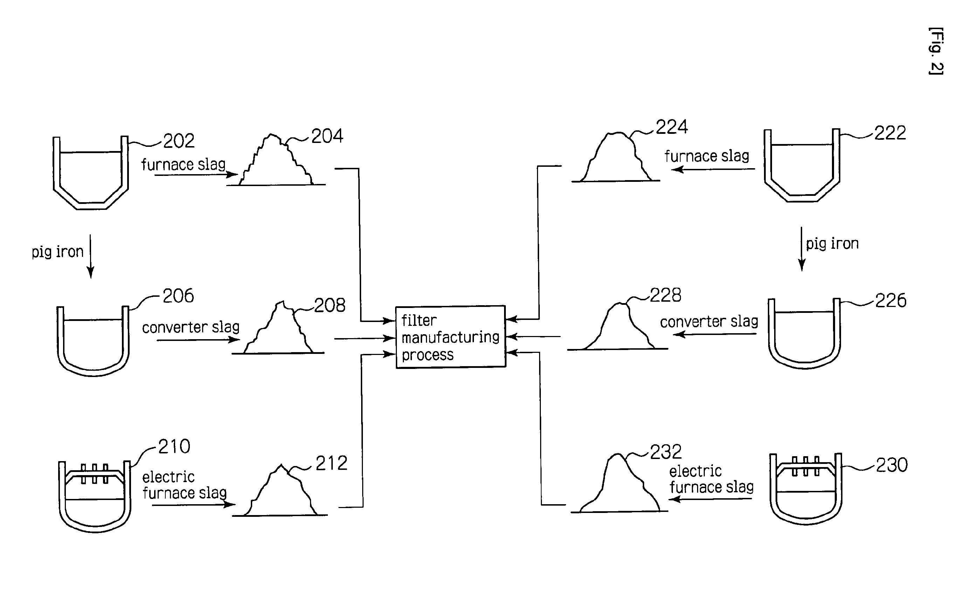

FIG. 2 schematically shows example procedures of preparing various kinds of steel slags useful as a starting material of filter body 102. In an example embodiment, steel slags are produced by, for instance, blast furnaces 202 and 222, converter furnaces 206 and 226, and electric furnaces 210 and 230. Each of the blast furnaces 202 and 222 refines iron ore into pig iron by performing conventional reduction treatment. The refining process in the blast furnaces 202 and 222 also produces molten furnace slag including a large percentage of lime (CaO), silica (SiO₂) alumina (Al₂O₃) and manganese oxides (MgO).

Because of its relatively low density, the molten furnace slag floats on the surface of the molten pig iron in the blast furnaces 202 and 222. The molten furnace slag is tapped off from the blast furnaces 202 and 222 for subsequent treatments. In one embodiment, the molten blast furnace slag is rapidly cooled by applying pressurized water as the slag runs from blast furnaces 202 and 222 into a cooling yard. This rapid cooling process causes the blast furnace slags 204 and 224 to become granulated. In another embodiment, the molten blast furnace slag is poured into a cooling yard without rapid cooling. In the cooling yard, the slags are slowly cooled by air and water sprinkling. These cooled and solidified blast furnace slags 204 and 224 are piled up in a cooling yard located adjacent to each of the blast furnaces 202 and 222.

Each of the pig irons from the blast furnaces 202 and 222 is poured into corresponding converter furnaces 206 and 226 where the pig irons are further refined into molten steel. During this refining process in the converter furnaces 206 and 226, converter slag is produced as a by-product and poured into corresponding cooling yards each adjacent to the converter furnaces 206 and 226. Also used for steelmaking are electric furnaces 210 and 230, each of which produces electric furnace slag as a by-product of the process of refining scrap metal into steel. The produced converter slag and electric furnace slag contain a large percentage of lime (CaO), silica (SiO₂), alumina (Al₂O₃) and manganese oxides (MgO). As with the blast furnace slags 204 and 224, the converter slag and electric furnace slag are rapidly or slowly cooled. The cooled converter slags 208 and 228 and electric furnace slags 212 and 232 are piled up in respective cooling yards.

In one embodiment, carbon dioxide may be injected in at least one of the blast furnace slags 204, converter slags 208 and 228 or electric furnace slags 212 and 232 before performing a cooling treatment to facilitate the carbonation of each steel slag. The carbonization of lime, silica, alumina and manganese oxides contained in each slag may stabilize the trapping efficiency and improve the durability of a resulting filter made from the carbonized slags. As a result of the injection of carbon dioxide, the resulting blast furnace slags 204, converter slags 208 and 228 or electric furnace slags 212 and 232 include at least one of silicon carbide, aluminum carbide and magnesium carbide. In one embodiment, the carbonation treatment may utilize carbon dioxide emitted in the steelmaking processes in each of the blast furnaces 202 and 222, converter furnaces 206 and 226 and electric furnaces 210 and 230, which facilitates the reduction of CO₂ emission from each furnace.

In one embodiment, a forming agent such as sodium hydrogen carbonate (NaHCO₃) or ammonium carbonate ((NH₄)₂CO₃) may be injected into at least one of the blast furnace slag, converter slag and electric furnace slag before cooling treatment so that larger number of pores can be formed in a resulting filter. The large porosity increases the trapping efficiency of the resulting filter.

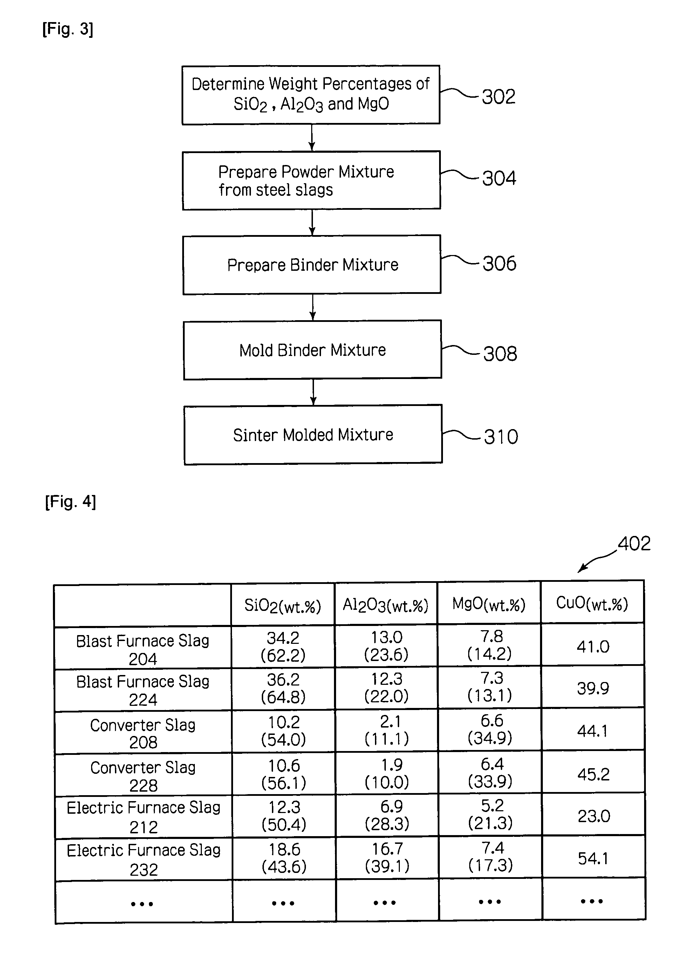

FIG. 3 illustrates an embodiment of an example process of fabricating an example particulate filter using steel slags as a starting material. In another embodiment, the operations illustrated in FIG. 3 and other FIGs. may be performed in different sequences. In yet other embodiments, one or more operations may be performed simultaneously. Accordingly, the operations as illustrated are examples and, as such, should not be viewed as limiting.

In an example operation 302, samples of each of the blast furnace slags 204, 224, converter slags 208, 228 and electric furnace slags 212, 232 are taken to determine, for example, the relative weight percentages of the components of each sample. The weight per unit volume of each sample may be measured using any known method in the art, such as Inductively Coupled Plasma Atomic Emission Spectroscopy (ICP-AES) or X-ray Diffraction (XRD). Samples may also be taken from different slags produced by different furnaces than the blast furnaces 202 and 222, converter furnaces 206 and 226 and electric furnaces 210 and 230.

Based on the measured weight per unit volume of each sample, the relative weight percentages of each component, such as SiO₂, Al₂O₃, MgO and CaO, are determined. The determined weight percentages may be stored in the format shown in table 402 in Fig. 4. The data in this table can be accessed and operated by any type of common general computers. FIG. 4 illustrates an example embodiment of table 402. Table 402 stores the calculated relative weight percentages of SiO₂, Al₂O₃, MgO and CaO for each sample taken from the blast furnace slags 204 and 224, converter slags 208 and 228 and electric furnace slags 212 and 232.

In an example operation 304, based on the records stored in table 402, one or more appropriate steel slags are selected from those stored in table 402 such that the weight percentages of the selected steel slag is similar to that of the stoichiometric cordierite composition. In another embodiment, an optimal mixture of steel slags selected from table 402 is determined such that the weight percentages of the mixed steel slags is similar to that of the stoichiometric cordierite composition. Given the stoichiometric cordierite composition of 2MgO-2Al2O3-5SiO2, the stoichiometric weight percentages of cordierite composition is 51.4% SiO₂, 34.9% Al₂O₃, and 13.7% MgO. Despite its large amount in each steel slag, CaO may be ignored in determining an optimal proportion of steel slags to be used in a cordierite filter because it is not a component of cordierite.

In one embodiment, to obtain a filter body consisting of cordierite, a starting slag mixture may contain (i) SiO₂ and Al₂O₃ each of which is within, for example, 15% on either side of their stoichiometric weight proportions and (ii) MgO which is within 5% on either side of its stoichiometric weight proportion. That is, the starting slag mixture may contain from about 36-66% by weight SiO₂, 20-50% by weight Al₂O₃ and 9-19% by weight MgO. This weight percent ranges of SiO₂, Al₂O₃, and MgO may be hereinafter referred to as a "first acceptable range." In one embodiment, one or more steel slags including SiO₂, Al₂O₃, and MgO whose weight percentages are within the first acceptable range are selected in order to obtain a starting slag mixture. In another embodiment, an optimal mixture proportion of steel slags is determined such that the weight percentages of SiO₂, Al₂O₃, and MgO included in the mixed steel slags are within the first acceptable range. In accordance with the determined proportion, one or more selected steel slags are mixed or blended to form a starting powder mixture by use of any method commonly used in the art. Accordingly, a starting slag mixture is prepared by selecting one or more appropriate steel slags or determining an optimal mixture proportion of steel slags based on the recorded relative weight percentages of SiO₂, Al₂O₃, and MgO.

Referring now to FIG. 4, it can be seen that each type of the steel slags may have uniform composition. For example, each of the blast furnace slags 204 and 224 has around 35% SiO₂, about 12.5% Al₂O₃, and about 7.5% MgO. In addition, the converter slag 208 has a similar composition to the converter slag 228 and the electric furnace slag 212 has a similar composition to the electric furnace slag 232. Since the composition of steel slags produced by each of the blast furnaces 202 and 222, converter furnaces 206 and 226, and electric furnaces 210 and 230 are typically stable and uniform in this example embodiment, the weight percentages measured for each furnace provides reliable guidance in determining which slag may be useful to form a cordierite filter body.

Looking at the example weight percentages recorded in table 402, it can be seen that each of the weight percentages of the blast furnace slags 204, 224 and electric furnace slags 212, 232 are within the first acceptable range. For example, the blast furnace slag 204 contains 34.2% by weight SiO₂, 13.0% by weight Al₂O₃, 7.8% by weight MgO and 41.0% by weight CaO. Accordingly, the weight percentages of three cordierite components are 62.2% by weight SiO₂, 23.6% by weight Al₂O₃, and 14.2% by weight MgO, which is clearly within the first acceptable range. By way of another example, the blast furnace slag 224 contains 36.2% by weight SiO₂, 12.3% by weight Al₂O₃, 7.3% by weight MgO and 39.9% by weight CaO. Accordingly, the weight percentages of three cordierite components is 64.9% by weight SiO₂, 22.0% by weight Al₂O₃, and 13.1 % by weight MgO, which is also within the first acceptable range. Similarly, in connection with the electric furnace slags 212 and 132, it is clear from table 402 that the weight percentages of three cordierite components therein are within the first acceptable range.

In another example embodiment, the weight percentages of the converter slags 208 and 228 are out of the first acceptable range. Consequently, the converter slags 208 and 228 can not be used as a starting slag mixture for a particulate filter without being mixed with other slags. Considering that the converter slags 208 and 228 contain relatively lower weight percentage of Al₂O₃, the converter slags 208 and 228 may be mixed with other types of slag which contain relatively higher weight percentage of Al ₂O₃ to form a starting slag mixture.

In another embodiment, to enhance an absorption efficiency (or trapping efficiency) of the filter 102, a narrower second acceptable range may be selected, wherein a starting slag mixture may contain (i) SiO₂ and Al₂O₃ each of which is within, for example, 10% on either side of their stoichiometric weight proportions and (ii) MgO which is within 3% on either side of its stoichiometric weight proportion. That is, the second acceptable range includes a starting powder mixture containing from about 41-61% by weight SiO₂, 25-45% by weight Al₂O₃ and 11-17% by weight MgO. It can be seen that none of the steel slags in table 402 is within the second acceptable range. However, an example starting slag mixture which is within the second acceptable range may be obtained by mixing the furnace slag 104 and the electric furnace slag 212 in the proportion of 1.0 kg of the furnace slag 104 to 1.0 kg of the electric furnace slag 212. The weight percentages of the mixture becomes 58.5% by weight SiO₂, 25.1% by weight Al₂O₃ and 16.4% by weight MgO, which is within the second acceptable range.

Thus, even though in certain embodiments the weight percentages of an individual steel slag is not within a predetermined acceptable range, in an embodiment a mixture of a plurality of steel slags can achieve the desired weight percentages of SiO₂, Al₂O₃, MgO within the predetermined acceptable range. In one embodiment, different types of slags are mixed to obtain a starting slag mixture within a predetermined acceptable range. Such a mixture of steel slags may be made by mixing one type of the steel slags (e.g., blast furnace slag) with a different type of steel slag (e.g., electric furnace slag). More than two types of steel slags may be mixed to obtain a starting slag mixture. For example, such a starting slag mixture may be made by mixing blast furnace slag, converter slag and electric furnace slag. In another embodiment, a mixture of steel slags may be made by mixing a plurality of the same type of steel slags that are produced by different furnaces (e.g., blast furnace slags 204 and 224 produced respectively by blast furnaces 202 and 222).

In an example operation 306, an organic binder may be added to the starting slag mixture prepared in operation 304 to form a well-mixed binder mixture. Such a binder mixture may be made by use of a mixer or blender.

Next, in an example operation 308, the binder mixture prepared in operation 306 is molded by various methods such as extrusion using a lattice-shaped die to form a presintered honeycomb filter body having substantially the same shape as the filter body 102 illustrated in FIG. 1.

In an example operation 310, the molded honeycomb body is sintered. In one embodiment, the sintering process is carried out within a temperature range from 1380 to 1445 degrees Celsius for 3-10 hours. The resulting honeycomb filter body is composed, at least in part, of porous cordierite. The cordierite filter body can trap particles from gases or liquids as they travel through the filter body.

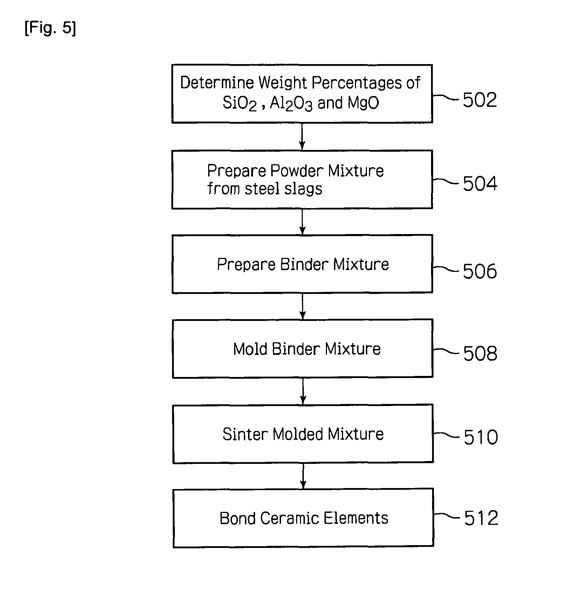

FIG. 5 illustrates another embodiment of an example process of fabricating an example particulate filter using steel slags as a starting material. In an example operation 502, the relative weight percentages of SiO₂, Al₂O₃, MgO and CaO contained in each of the blast furnace slags 204, converter slags 208 and 228 and electric furnace slags 212 and 232 are determined and the determined weight percentages are stored in table 402 in substantially the same manner as in operation 302. In an example operation 504, a starting slag mixture is prepared by selecting one or more appropriate steel slags or by determining an optimal mixture proportion of steel slags based on the recorded relative weight percentages of SiO₂, Al₂O₃, and MgO in substantially the same manner as in operation 304. In an example operation 506, an organic binder may be added to the starting slag mixture prepared in operation 504 to form a well-mixed binder mixture.

Next, in an example operation 508, the binder mixture prepared in operation 506 may be molded to form a plurality of elongated cylindrical filter elements.

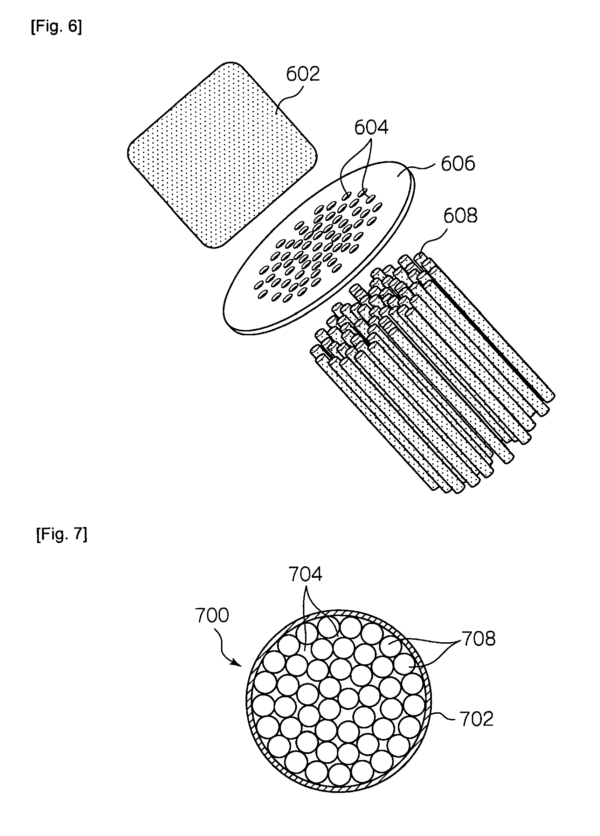

FIG. 6 schematically illustrates an example molding process in accordance with various embodiments. As shown in FIG. 6, binder mixture 602 prepared in operation 506 is molded by use of circular die 606 having a plurality of circular slits to form a plurality of elongated cylindrical filter elements 608. Each of the molded filter elements 608 may have substantially the same shape and size as one another. In other embodiments, the molded filter elements 608 may have different shapes and/or sizes. The plurality of filter elements 608 are sintered to become a plurality of sintered filter elements 708 in an example operation 510.

In an example operation 612, the sintered filter elements 708 are joined with one another in a side-to-side fashion by a known joining material such as common organic binder. The plurality of filter elements 608 are arranged such that the axes of the elements 708 are arranged substantially parallel to one another.

FIG. 7 illustrates an example particulate filter mounting the plurality of elongated film elements 708 in accordance with various embodiments of this disclosure. The particular filter 700 comprises a metal casing 702 filled with the joined plurality of filter elements 608. Each of the filter elements 608 is formed of, at least in part, porous cordierite. The joined filter elements 608 define a plurality of air channels 704 each of which extends in the axis direction of each of the filter elements 608. A contaminated fluid is introduced into the filter 700 and then travels through the channel 704 in contact with the surface of filter elements 608. As the fluid travels through the channel 704, solid particulates included therein are trapped by the porous filter elements 608.

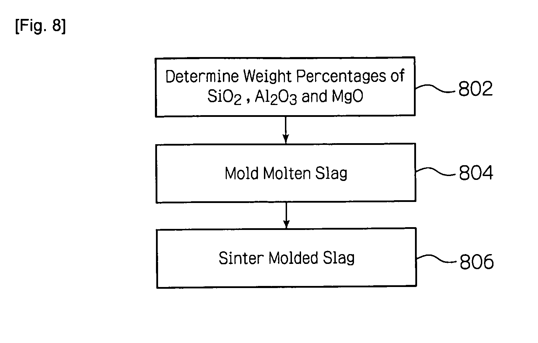

FIG. 8 illustrates another embodiment of an example process of fabricating an example particulate filter using steel slags as a starting material. In an example operation 802, the relative weight percentages of SiO₂, Al₂O₃, MgO and CaO contained in each of the blast furnace slags 204, converter slags 208 and 228 and electric furnace slags 212 and 232 are determined and the determined weight percentages are stored in table 402 in substantially the same manner as in operation 302.

In an example operation 804, if one of the steel slags is within a predetermined acceptable weight range (e.g., the first or second acceptable range as described above), the steel slag may be directly introduced into a die to form a honeycomb filter body without solidifying the molten slag by performing cooling treatment. In another embodiment, the steel slag may be formed into an elongated cylindrical shape, similar to that shown in FIG 6, labeled as element 608. In an example operation 806, the molded filter body may be sintered in substantially the same manner as in operation 310. The sintered filter body may be composed, at least in part of, cordierite useful for a particulate filter.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as " including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., " a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., " a system having at least one of A, B, or C" would include but not be limited to systems that have A alone, B alone, C alone, A and B together, A and C together, B and C together, and/ or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein can be readily broken down into a lower third, middle third and upper third, etc. As will also be understood by one skilled in the art all language such as "up to," "at least," "greater than," "less than," and the like include the number recited and refer to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

## Claims

1. A method of fabricating a cordierite article comprising:
determining relative percentages of SiO₂, Al₂O₃, and MgO included in one or more steel slags;
preparing, based on the determined percentages, a starting mixture from said one or more steel slags;
molding the starting mixture into a desired shape; and
sintering the molded starting mixture, resulting in a sintered mixture,
**characterized by**
selecting the one or more steel slags including a carbide selected from the group consisting of silicon carbide, aluminium carbide, magnesium carbide,
further comprising molding the starting mixture to include one or more elongated limbs that define one or more air channels extending in the axis direction of the one or more elongated limbs.

2. The method of claim 1, wherein the sintered mixture is composed, at least in part, of cordierite.

3. The method according to claims 1 or 2, further comprising molding the starting mixture into a honeycomb shape.

4. The method according to any of the preceding claims, further comprising obtaining the one or more steel slags from one or more blast furnace slags.

5. The method according to any of the preceding claims, further comprising obtaining the one or more steel slags from one or more converter slags.

6. The method according to any of the preceding claims, further comprising obtaining the one or more steel slags from one or more electric furnace slags.

7. The method according to any of the preceding claims, further comprising preparing the starting mixture by mixing a plurality of steel slags each selected from the group consisting of one or more blast furnace slags, one or more converter slags and one or more electric furnace slags.

8. The method according to any of the preceding claims, further comprising molding the starting mixture by extrusion.

9. The method of according to any of the preceding claims, further comprising:
molding the starting mixture into a plurality of elongated cylindrical filter elements;
sintering each of the molded plurality of elongated cylindrical filter elements; and
joining the plurality of elongated cylindrical filter elements with one another.

10. The method according to any of the preceding claims, wherein a forming agent is injected into at least one of the blast furnace slag, converter slag and electric furnace slag before cooling treatment so that a large number of pores can be formed in the resulting filter.

11. The method according to any of the preceding claims, further comprising joining the elongated cylindrical filter elements in a side-by-side fashion such that each of the filter elements defines one or more air channels between neighboring filter elements.

## Patentansprüche

1. Verfahren zum Herstellen eines Erzeugnisses aus Cordierit, das umfasst, dass:
relative prozentuale Anteile von SiO₂, Al₂O₃ und MgO bestimmt werden, die in einer oder mehreren Stahlschlacke/n enthalten sind;
ein Ausgangsgemisch aus der einen oder den mehreren Stahlschlacke/n auf Basis der bestimmten prozentualen Anteile gefertigt wird;
das Ausgangsgemisch in eine gewünschte Form gebracht wird; und
das geformte Ausgangsgemisch gesintert wird, so dass ein gesintertes Gemisch entsteht,
**dadurch gekennzeichnet, dass**
die eine oder die mehreren Stahlschlacke/n ausgewählt wird/werden, die ein Karbid enthält/ enthalten, das aus der Gruppe ausgewählt wird, die aus Siliziumkarbid, Aluminiumkarbid und Magnesiumkarbid besteht,
wobei es des Weiteren umfasst, dass das Ausgangsgemisch so geformt wird, dass es einen oder mehrere länglichen Steg/e enthält, der/die einen oder mehrere Luftkanal/-kanäle bildet/bilden, der/die in der Achsenrichtung des/der einen oder mehreren Stegs/Stege verläuft/ verlaufen.

2. Verfahren nach Anspruch 1, wobei das gesinterte Gemisch wenigstens teilweise aus Cordierit I besteht.

3. Verfahren nach Anspruch 1 oder 2, das des Weiteren umfasst, dass das Ausgangsgemisch in eine Wabenform gebracht wird.

4. Verfahren nach einem der vorangehenden Ansprüche, das des Weiteren umfasst, dass die eine oder die mehrere Stahlschlacke/n aus einer oder mehreren Hochofen-Schlacke/n gewonnen wird/werden.

5. Verfahren nach einem der vorangehenden Ansprüche, das des Weiteren umfasst, dass die eine oder mehreren Stahlschlacke/n aus einer oder mehreren Konverter-Schlacke/n gewonnen wird/werden.

6. Verfahren nach einem der vorangehenden Ansprüche, das des Weiteren umfasst, dass die eine oder die mehreren Stahlschlacke/n aus einer oder mehreren Elektroofen-Schlacke/n gewonnen wird/werden.

7. Verfahren nach einem der vorangehenden Ansprüche, das des Weiteren umfasst, dass das Ausgangsgemisch gefertigt wird, indem eine Vielzahl von Stahl-Schlacken gemischt werden, die jeweils aus der Gruppe ausgewählt werden, die aus einer oder mehreren Hochofen-Schlacke/n, einer oder mehreren Konverter-Schlacke/n und einer oder mehreren Elektroofen-Schlacke/n gewonnen werden.

8. Verfahren nach einem der vorangehenden Ansprüche, das des Weiteren umfasst, dass das Ausgangsgemisch mittels Extrusion geformt wird.

9. Verfahren nach einem der vorangehenden Ansprüche, das des Weiteren umfasst:
Formen des Ausgangsgemischs zu einer Vielzahl länglicher zylindrischer Filterelemente;
Sintern jedes der geformten Vielzahl länglicher zylindrischer Filterelemente, und
Verbinden der Vielzahl länglicher zylindrischer Filterelemente miteinander.

10. Verfahren nach einem der vorangehenden Ansprüche, wobei ein Porenbildner (forming agent) in die Hochofen-Schlacke, die Konverter-Schlacke oder/und die Elektroofen-Schlacke vor Kühlbehandlung eingebracht wird, so dass eine große Anzahl von Poren in dem entstehenden Filter ausgebildet werden können.

11. Verfahren nach einem der vorangehenden Ansprüche, das des Weiteren umfasst, dass die länglichen zylindrischen Filterelemente nebeneinander so verbunden werden, dass jedes der Filterelemente einen oder mehrere Luftkanal/-kanäle zwischen benachbarten Filterelementen bildet.

## Revendications

1. Une méthode de fabrication d'un article en cordiérite comprenant :
la détermination des pourcentages relatifs de Si0₂, Al₂0₃ et MgO inclus dans un ou plusieurs scories d'acier ;
la préparation, en fonction des pourcentages déterminés, d'un mélange de départ desdits un ou plusieurs scories d'acier ;
le moulage du mélange de départ à la forme voulue ; et
le frittage du modèle de départ moulé, résultant en un mélange fritté,
**caractérisé en ce que**
la sélection des un ou plusieurs scories d'acier incluant un carbure sélectionné parmi le groupe constitué du carbure de silicium, du carbure d'aluminium, du carbure de magnésium,
comprenant de plus le moulage du mélange de départ pour inclure un ou plusieurs membres allongés qui définissent un ou plusieurs canaux d'air s'étendant dans la direction axiale d'un ou plusieurs des membres allongés.

2. La méthode de la revendication 1 où le mélange fritté est composé, au moins en partie, de cordiérite.

3. La méthode selon les revendications 1 ou 2, comprenant de plus le moulage du mélange de départ en forme de nid-d'abeilles.

4. La méthode selon une des revendications précédentes, comprenant de plus l'obtention d'un ou plusieurs scories d'acier depuis un ou plusieurs laitiers de hauts-fourneaux.

5. La méthode selon une des revendications précédentes, comprenant de plus l'obtention d'un ou plusieurs scories d'acier depuis un ou plusieurs laitiers de convertisseur.

6. La méthode selon une des revendications précédentes, comprenant de plus l'obtention d'un ou plusieurs scories d'acier depuis un ou plusieurs laitiers de four électrique.

7. La méthode selon une des revendications précédentes, comprenant de plus la préparation du mélange de départ par mélange de plusieurs scories d'acier sélectionnés chacun parmi le groupe constitué d'un ou plusieurs laitiers de hauts-fourneaux, un ou plusieurs laitiers de convertisseur et un ou plusieurs laitiers de four électrique.

8. La méthode selon une des revendications précédentes, comprenant de plus le moulage du mélange de départ par extrusion.

9. La méthode selon une des revendications précédentes, comprenant de plus :
le moulage du mélange de départ en plusieurs éléments de filtre cylindriques allongés ; le frittage de chacun de ces multiples éléments de filtre cylindriques allongés moulés ; et le regroupement de ces multiples éléments de filtre cylindriques allongés entre eux.

10. La méthode selon une des revendications précédentes, où un agent de formation est injecté dans au moins un des laitiers de hauts-fourneaux, laitier de convertisseur et laitiers de four électrique avant un traitement de refroidissement de façon à former un grand nombre de pores dans le filtre résultant.

11. La méthode selon une des revendications précédentes, comprenant de plus le regroupement des éléments de filtre cylindriques allongés côte à côte de façon que chacun des éléments de filtre définisse un ou plusieurs canaux d'air entre les éléments de filtre voisins.
